Europäisches Patentamt

European Patent Office

Office européen des brevets

(11) Veröffentlichungsnummer: **0 133 490**
**B1**

(12) **EUROPÄISCHE PATENTSCHRIFT**

(45) Veröffentlichungstag der Patentschrift:
**13.05.87**

(51) Int. Cl.⁴: **C 01 B 25/46,** C 01 B 25/237

(21) Anmeldenummer: **84108459.3**

(22) Anmeldetag: **18.07.84**

(54) Verfahren zur Verminderung des Fluorgehaltes einer Nassverfahrensphosphorsäure.

(30) Priorität: **06.08.83 DE 3328499**

(43) Veröffentlichungstag der Anmeldung:
**27.02.85 Patentblatt 85/9**

(45) Bekanntmachung des Hinweises auf die Patenterteilung:
**13.05.87 Patentblatt 87/20**

(84) Benannte Vertragsstaaten:
**BE DE FR GB IT NL SE**

(56) Entgegenhaltungen:
**DE - A - 2 535 971**
**DE - A - 2 538 410**
**DE - B - 2 229 602**

(73) Patentinhaber: **HOECHST AKTIENGESELLSCHAFT,**
**Postfach 80 03 20, D-6230 Frankfurt am Main 80 (DE)**

(72) Erfinder: **Gradl, Reinhard, Dr., Heimbacher Weg 27,**
**D-5042 Erftstadt (DE)**
Erfinder: **Schimmel, Günther, Dr., Ehrenstrasse 16,**
**D-5042 Erftstadt (DE)**

**Beschreibung**

Die vorliegende Erfindung betrifft ein Verfahren zur Verminderung des Fluorgehaltes einer Nassverfahrensphosphorsäure, indem man die rohe, fluorionenenthaltende Säure mit einem organischen Lösungsmittel extrahiert, dann den erhaltenen organischen Phosphorsäureextrakt mit einer wässrigen Aluminiumhydroxidsuspension wäscht und aus dem gewaschenen Extrakt durch Rückextraktion mit Wasser oder einer wässrigen Alkalilösung eine gereinigte Phosphorsäure bzw. Alkaliphosphatlösung gewinnt.

Die Reinigung von Nassverfahrensphosphonsäure mit Hilfe organischer Lösungsmittel, die mit Wasser nicht, bzw. teilweise oder vollständig mischbar sind, ist seit langem bekannt. Auch die Entfernung bzw. Verringerung von Fluoridionen sowohl aus Rohphosphorsäure als auch während des Extraktionsprozesses oder aber aus den gereinigten Endprodukten wurde schon wiederholt beschrieben.

So ist beispielsweise in der DE-B-2 229 602 ein Verfahren zur Reinigung von technischer Phosphorsäure durch Extraktion mit einem, mit Wasser unbegrenzt mischbaren organischen Lösungsmittel offenbart, gemäss dem die Lösung aus Phosphorsäure und diesem Lösungsmittel mit einer konzentrierten wässrigen Lösung eines anorganischen Salzes extrahiert wird. Als Salzlösungen werden dazu bevorzugt saure Phosphate mehrwertiger Kationen, u.a. auch des Aluminiums, eingesetzt. Von erheblichem Nachteil dabei ist, dass die organische Phase zur Entfernung der aus der Salzphase eingeschleppten Kationen anschliessend mit einem stark sauren Kationenaustauscher behandelt werden muss.

Auch nach der DE-B-2 535 971 lassen sich aus Nassverfahrensphosphorsäure die Fluoridionen entfernen, wenn die Rohsäure mit ca. 25% $P_2O_5$ mit einem organischen, mit Wasser nur wenig mischbaren Lösungsmittel extrahiert und die organische Phosphorsäurephase mit einer wässrigen oder phosphorsauren Lösung, z.B. einer Aluminiumverbindung, gewaschen wird. Letztere wird in erster Linie durch Umsetzung von $Al(OH)_3$ mit konzentrierter Phosphorsäure erhalten, die aus dem Endprodukt abgezweigt wird und die etwa 0,5 bis 2,5% Aluminiumionen enthält. Nachteilig dabei ist, dass diese Massnahme nur bei sehr verdünnten Phosphorsäureextrakten anwendbar ist, und dass aufgrund der geringen Löslichkeit des Aluminiumphosphates grosse Mengen Waschflüssigkeit bezogen auf die in der organischen Phase gelöste Phosphorsäure in das System eingebracht werden müssen und daher eine sehr verdünnte Phosphorsäure entsteht. Ausserdem wird für die Herstellung der Aluminiumphosphatlösung ein beträchtlicher Teil an bereits gereinigter Phosphorsäure wieder in den Prozess zurückgeführt, wodurch sich die Gesamtausbeute verschlechtert. Darüberhinaus erfordert die Herstellung der Aluminiumphosophatlösung einen zusätzlichen Verfahrensschritt, für den die Zu- und Abfuhr von Wärme und eine sorgfältige Reaktionsführung erforderlich sind.

Der Einsatz von handelsüblichem Aluminiumhydroxid erwies sich ebenfalls als nicht möglich, da sich diese Verbindung in Wasser praktisch kaum und in Phosphorsäure nur mit sehr geringer Geschwindigkeit löst, so dass Feststoffablagerungen in den Extraktionsvorrichtungen den Prozessablauf stören würden (vgl. nachfolgendes Beispiel 6).

Es war daher Aufgabe der vorliegenden Erfindung nach einem Verfahren zu suchen, das es gestattet, den Fluorgehalt von Nassverfahrensphosphorsäurelösungen in organischen Lösungsmitteln mit einem $P_2O_5$-Gehalt von mindestens 10 Gewichts-% zu vermindern, wobei die organischen Lösungsmittel vorzugsweise mit Wasser nicht oder nur wenig mischbar sind und die Phosphorsäurelösung möglichst wenig mit Wasser verdünnt sowie nicht durch Fremdionen verunreinigt wird.

Überraschenderweise wurde gefunden, dass sich diese Aufgabe lösen lässt, wenn man die genannte organische Lösung der Nassverfahrensphosphorsäure mit einer wässrigen Aluminiumhydroxidsuspension wäscht, die mindestens 45 Gewichts-%, vorzugsweise 46 bis 55 Gewichts-%, eines Aluminiumhydroxids enthält, von dem 99% eine Korngrösse kleinert als 1 µm aufweisen und dessen Rest kleiner als 10 µm ist.

Dabei empfiehlt es sich, die Suspension in einer Menge von 0,1 bis 3 Gewichts-% einzusetzen, berechnet als Aluminium und bezogen auf das im organischen Phosphorsäureextrakt gelöste $P_2O_5$. Für die erfindungsgemässe Arbeitsweise eignet sich beispielsweise die von der Martinswerk GmbH, Bergheim unter dem Namen Martifin® vertriebene Aluminiumhydroxidsuspension.

Die Waschung der phosphorsäurehaltigen organischen Extrakte erfolgt vorzugsweise in mehreren Stufen, wobei im Gegenstrom zum Extrakt, der an der Stufe 1 eintritt, eine kleine Menge Wasser in der letzten Stufe aufgegeben wird. Vorteilhafterweise wird die Aluminiumhydroxid-Suspension etwa in einer der mittleren Stufen aufgegeben, so dass einerseits die Wirksamkeit der Aluminiumionen zur Überführung der Fluoridionen von der organischen in die wässrige Phase in mehreren Stufen erfolgen kann und andererseits Aluminiumionen, die in die organische Phase gelangen, ebenfalls in mehreren Stufen ausgewaschen werden können. Es ist zweckmässig die Aluminiumhydroxidsuspension direkt in die Mischzone, der aus Mischern und Abscheidern bestehenden Waschung zu leiten.

Obwohl der Fachmann annehmen sollte, dass mit einer Lösung eines Aluminiumsalzes eine stärkere Verminderung des Fluorgehaltes erzielt werden könnte als mit einer Suspension einer festen Aluminiumverbindung, ist es, wie ein Vergleich der nachfolgenden Beispiele 2 und 3 zeigt, erstaunlicherweise genau umgekehrt, wobei sich ausserdem noch gezeigt hat, dass die erfindungsgemässe Suspension ausserordentlich stabil ist und es zu keinerlei Ausscheidungen von Feststoffen kommt. Ein weiterer Vorteil des neuen Verfahrens ist, dass die eingebrachte Menge Wasser nur ca. 2% der ohnehin eingebrachten Waschwassermenge beträgt und somit für die $P_2O_5$-Konzentration der organischen Phase praktisch ohne Bedeutung ist, d.h. die bei der Reextraktion entstehende Phosphorsäure weist eine gleichhohe Konzentration auf, wie bei der Waschung ohne Aluminiumzusatz. Ferner werden durch das Aluminiumhydroxid keine weiteren Ionen eingebracht, so dass die bei Stufe 1 aus der Waschung austretende Waschflüssigkeit, die üblicherweise in die Extraktionsstufe rezirkuliert wird, keine nachteilige Auswirkung auf die $P_2O_5$-Extraktionsausbeute hat. Die Suspension ist problemlos zu transportieren, zu lagern und zu dosieren.

Im folgenden wird die Erfindung anhand von Beispielen näher erläutert, wobei die %-Angaben als Gewichts-% zu verstehen sind:

Verschiedene Rohphosphorsäuren mit etwa 50% $P_2O_5$ wurden zunächst zur Reduzierung der Sulfationen und der organischen Verunreinigungen in bekannter Weise mit Kalkhydrat und Aktivkohle behandelt. Die vorgereinigten Säuren wurden anschliessend mit Amylalkohol in einer 8stufigen Gegenstromapparatur extrahiert, wobei zusätzlich im Gegenstrom zur Phosphorsäure konzentrierte Schwefelsäure in die 7. Mischer-Stufe eindosiert wurde. Die dabei entstehenden phosphorsäurehaltigen Lösungsmittelphasen — im folgenden als Rohextrakte bezeichnet — wurden in einer 10stufigen Mischer-Abscheider-Batterie mit destilliertem Wasser in einem Verhältnis von 30:1 gewaschen. Die an der Stufe 1 austretende Waschflüssigkeit wurde in die 1. Extraktionsstufe rezirkuliert. Extraktion und Waschung wurden gleichzeitig und kontinuierlich bis zur Gleichgewichtseinstellung betrieben. Im Anwendungsfall wurden die Aluminiumverbindungen in die Mischzone der 5. Waschstufe dosiert.

*Beispiel 1* (Vergleichsbeispiel)

Die Exktaktion von Rohphosphorsäure auf Basis Kolaphosphat lieferte einen Rohextrakt mit einem $P_2O_5$-Gehalt von 14,16% $P_2O_5$ und einem Fluor-Gehalt von 70 ppm. Der nach der 10stufigen Waschung entstehende gereinigte Phosphorsäureextrakt hatte einen $P_2O_5$-Gehalt von 11,93% $P_2O_5$ und der Fluorgehalt betrug 60 ppm, so dass demnach keine Abreicherung stattfand. Die $P_2O_5$-Extraktionsausbeute betrug 95,75%.

*Beispiel 2* (Vergleichsbeispiel)

Es wurden die gleichen Bedingungen wie in Beispiel 1 eingehalten, allerdings zusätzlich in die 5. Stufe der Waschbatterie eine Monoaluminiumphosphatlösung in einer Menge von 0,26% Al, bezogen auf $P_2O_5$, der Rohsäure eindosiert. Die Monoaluminiumphosphatlösung wurde hergestellt durch Auflösen von 129,0 g technischem Aluminiumhydroxid in 585,3 g Phosphorsäure (60% $P_2O_5$) und 300,7 g Wasser. Allerdings war diese Mischung bei 40°C auch nach 18stündigem Rühren noch trübe. Erst nach Aufheizen auf 80°C konnte eine klare Lösung erhalten werden. Vor Dosierung in die Waschstufe musste die Lösung auf 40°C abgekühlt werden. Die gereinigte Phosphorsäureextraktlösung hatte einen $P_2O_5$-Gehalt von 10,9% und einen Fluorgehalt von 29 ppm entsprechend einer Abreicherung auf 53,8%. Die Ausbeute betrug 93,7%.

*Beispiel 3*

Unter sonst gleichen Versuchsbedingungen wie in Beispiel 1 wurde in die 5. Waschstufe die erfindungsgemässe Aluminiumhydroxidsuspension mit einem Feststoffgehalt von 50% in einem Verhältnis von 0,26% Al bez. auf $P_2O_5$ der Rohsäure eingesetzt. Das suspendierte $Al(OH)_3$ hatte eine Korngrösse von 99% kleiner 1 µm. Der entstehende Reinextrakt hatte einen $P_2O_5$-Gehalt von 11,84% $P_2O_5$ und einen Fluorgehalt von 24 ppm, entsprechend einer Abreicherung auf 41,6%. Die $P_2O_5$-Ausbeute betrug 95,7%.

*Beispiel 4* (Vergleichsbeispiel)

Wie in Beispiel 1 wurde eine Rohphosphorsäure auf Basis Marokkophosphat mit Amylalkohol extrahiert und der entstehende Rohextrakt mit Wasser gewaschen. Das Ergebnis ist in nachstehender Tabelle zusammengefasst.

*Beispiel 5* (Vergleichsbeispiel)

Wie in Beispiel 4, jedoch unter Zusatz von Monoaluminiumphosphatlösung in die Waschung wurde extrahiert und der Extrakt gewaschen. Das Ergebnis ist in nachstehender Tabelle aufgeführt.

*Beispiel 6* (Vergleichsbeispiel)

Anstelle der Monoaluminiumphosphatlösung wie in Beispiel 5 wurde eine Suspension von handelsüblichem Aluminiumhydroxid in Wasser verwendet. Das Aluminiumhydroxid hatte folgende Korngrössenverteilung: 45-106 µm: 55%; > 106 µm: 15%; < 45 µm: 30%. Während des Versuchs bildeten sich jedoch in dem Mischer der Waschstufe 5 Feststoffablagerungen aus Aluminiumhydroxid, die im weiteren Verlauf zu Verstopfungen der Einläufe der wässrigen Phase aus Abscheider 6 und der organischen Phase aus Abscheider 4 führten, so dass der Versuch abgebrochen werden musste.

*Beispiel 7*

Es wurde verfahren wie in Beispiel 4, allerdings wurde in den Mischer der Waschstufe 5 die erfindungsgemässe Aluminiumhydroxidsuspension eindosiert. Das Ergebnis ist in nachstehender Tabelle aufgeführt.

| | Rohextraxt | | | | Reinextrakt | | | Abreicherung auf | |
|---|---|---|---|---|---|---|---|---|---|
| Beispiel | $P_2O_5$ | F | $F/P_2O_5$ | Al-Menge | $P_2O_5$ | F | $F/P_2O_5$ | % | Ausbeute |
| 4 | 13,85 | 230 | 1660 | 0 | 11,88 | 100 | 1600 | 96,4 | 97,0 |
| 5 | 13,85 | 230 | 1660 | 0,27 | 11,02 | 90 | 816 | 49,2 | 95,0 |
| 6 | Versuch abgebrochen | | | | | | | | |
| 7 | 13,85 | 230 | 1660 | 0,27 | 11,86 | 89 | 750 | 45,2 | 97,0 |

*Beispiel 8* (Vergleichsbeispiel)

Wie in Beispiel 1 wurde eine Rohphosphorsäure auf Basis südafrikanischen Phalaborwaphosphat extrahiert und der Rohextrakt mit Wasser gewaschen. Die P$_2$O$_5$-Konzentration des gereinigten Extrakts betrug 11,89% und der Fluorgehalt 120 ppm. Die P$_2$O$_5$-Ausbeute in der Extraktion betrug 96,7%.

*Beispiel 9*

Es wurde verfahren wie in Beispiel 8, aber zusätzlich in die 5. Waschstufe die erfindungsgemässe Suspension von Aluminiumhydroxid in einer Menge von 0,245% Al bez. auf P$_2$O$_5$ eindosiert. Der P$_2$O$_5$-Gehalt des Reinextrakts betrug 11,85% P$_2$O$_5$ und der Fluorgehalt 55 ppm. Die P$_2$O$_5$-Ausbeute betrug 96,7%.

*Beispiel 10*

Wie in Beispiel 9 wurde die erfindungsgemässe Aluminiumhydroxid-Suspension allerdings in einer Menge von 0,49% Al bzw. auf P$_2$O$_5$ eindosiert. Der Fluorgehalt betrug 30 ppm bei einer P$_2$O$_5$-Konzentration von 11,80% P$_2$O$_5$. Die Ausbeute betrug 96,5%.

**Patentansprüche**

1. Verfahren zur Verminderung des Fluorgehaltes einer Nassverfahrensphosphorsäure, indem man die rohe, fluorionenenthaltende Säure mit einem organischen Lösungsmittel extrahiert, den erhaltenen organischen Phosphorsäureextrakt mit einer wässrigen Aluminiumhydroxidsuspension wäscht und aus dem gewaschenen Extrakt durch Rückextraktion mit Wasser oder einer wässrigen Alkalilösung eine gereinigte Phosphorsäure bzw. Alkaliphosphatlösung gewinnt, dadurch gekennzeichnet, dass man eine wässrige Aluminiumhydroxidsuspension einsetzt, die mindestens 45 Gewichts-% eines Aluminiumhydroxids enthält, von dem 99% eine Korngrösse kleiner als 1 µm aufweisen und dessen Rest kleiner als 10 µm ist.

2. Verfahren nach Anspruch 1, dadurch gekennzeichnet, dass man eine Suspension einsetzt, die 46 bis 55 Gewichts-% Aluminiumhydroxid enthält.

3. Verfahren nach Anspruch 1 oder 2, dadurch gekennzeichnet, dass man die Suspension in einer Menge von 0,1 bis 3 Gewichts-% einsetzt, berechnet als Aluminium und bezogen auf das im organischen Phosphorsäureextrakt gelöste P$_2$O$_5$.

**Claims**

1. Process for reducing the fluorine content in wet-process phosphoric acid, wherein the crude acid containing fluorine ions is extracted with an organic solvent, the resulting organic phosphoric acid extract is scrubbed with an aqueous aluminum hydroxide suspension and a purified phosphoric acid or alkali metal phosphate solution is recovered from the scrubbed extract by reextracting it with water or an aqueous alkali metal solution, which comprises using an aqueous aluminum hydroxide suspension containing at least 45 weight % aluminum hydroxide particles of which 99% have a size of less than 1 µm, and the balance has a size of less than 10 µm.

2. Process as claimed in claim 1, wherein a suspension containing 46-55 weight % aluminum hydroxide is used.

3. Process as claimed in claim 1 or 2, wherein the suspension is used in a proportion of 0.1 to 3 weight %, calculated as aluminum and based on the P$_2$O$_5$ dissolved in the organic phosphoric acid extract.

**Revendications**

1. Procédé pour réduire la teneur en fluor d'un acide phosphorique du procédé humide, dans lequel on extrait l'acide brut contenant des ions fluor par un solvant organique, on lave l'extrait organique d'acide phosphorique par une suspension aqueuse d'hydroxyde d'aluminium et on récupère de l'extrait lavé par réextraction par l'eau ou par une solution alcaline aqueuse un acide phosphorique purifié, ou bien une solution de phosphate alcalin, caractérisé en ce que l'on utilise une suspension aqueuse d'hydroxyde d'aluminium contenant au moins 45% en poids d'un hydroxyde d'aluminium dont 99% des particules présentent une dimension inférieure à 1 µm et le reste consiste en particules d'une dimension inférieure à 10 µm.

2. Procédé selon la revendication 1, caractérisé en ce que l'on utilise une suspension contenant 46 à 55% en poids d'hydroxyde d'aluminium.

3. Procédé selon la revendication 1 ou 2, caractérisé en ce que l'on utilise la suspension en quantité de 0,1 à 3% en poids, calculée en aluminium et rapportée au P$_2$O$_5$ dissous dans l'extrait organique d'acide phosphorique.